# EUROPÄISCHE PATENTSCHRIFT

(11) **EP 0 364 809 B1**
(45) Veröffentlichungstag und Bekanntmachung des Hinweises auf die Patenterteilung: **23.03.1994**
(21) Anmeldenummer: 89118303.0
(22) Anmeldetag: 03.10.1989
(51) Int. Cl.: F24D 3/16

(54) **Raumtemperierungselement zur Montage an Wand- und Deckenflächen**
Element for tempering a space to be affixed to walls or ceilings
Elément pour tempérer des locaux à monter au mur ou au plafond

(30) Priorität: 21.10.1988 DE 8813230 U; 10.12.1988 DE 8815347 U
(43) Veröffentlichungstag der Anmeldung: 25.04.1990
(73) Patentinhaber: TRUBE & KINGS KG, D-56767 Uersfeld (DE)
(72) Erfinder: Breithaupt, Albert, Dipl.-Ing., D-5441 Uersfeld (DE)
(74) Vertreter: Patentanwälte Dr. Solf & Zapf

(56) Entgegenhaltungen:
- DE-U- 8 811 136
- GB-A- 2 152 970
- US-A- 4 424 656

## Beschreibung

Die vorliegende Erfindung betrifft ein Flächen-Verkleidungselement zur flächendeckenden Montage insbesondere an Wänden und/oder Decken sowie zur Temperierung von Räumen, bestehend aus einem Wärmeübertragungsprofil und mindestens einer innerhalb des Wärmeübertragungsprofils verlaufenden, mit diesem über ein einstückiges Teilprofil in wärmeleitendem Kontakt stehenden Rohrleitung für ein Wärmetransportmedium, wobei das Wärmeübertragungsprofil an einer Längsseite einer zur Wand bzw. Decke parallelen Flächenwandung eine seitlich offene Nut und an der gegenüberliegenden Längsseite eine an die Nut angepaßte, sich in der Ebene der Nut von dieser weg nach außen erstreckende Feder aufweist.

Ein derartiges Flächen-Verkleidungselement ist aus jeder der Druckschriften GB-A-2 152 970 und US-A-4 424 656 bekannt. Dabei besitzt aber jeweils die zum Zwecke der Flächenverkleidung naturgemäß relativ breit ausgebildete Flächenwandung nur eine geringe "Dicke", so daß die über die Rohrleitung und das diese aufnehmende Teilprofil zugeführte bzw. abzuführende Wärme nur in unzureichendem Maße über die Flächenwandung "transportiert" werden dürfte. Hierdurch ist auch der Wärmeübergang zwischen dem zu temperierenden Raum und dem durch die Rohrleitung strömenden Wärmetransportmedium nicht optimal.

Der vorliegenden Erfindung liegt daher die Aufgabe zugrunde, ausgehend von diesem Stand der Technik ein gattungsgemäßes Flächen-Verkleidungselement so zu verbessern, daß die Wärmeverteilung, d.h. der sog. Wärmegradient, innerhalb des Wärmeübertragungsprofils wesentlich verbessert wird.

Erfindungsgemäß wird dies gemäß dem kennzeichnenden Teil des Anspruchs 1 dadurch erreicht, daß das Wärmeübertragungsprofil zwei zu der Flächenwandung etwa senkrecht angeordnete Seitenwandungen und damit einen flachen, im wesentlichen U-förmigen Querschnitt sowie im Bereich der Flächenwandung mindestens einen in Profillängsrichtung verlaufenden, sickenartigen Profilabschnitt mit zwei zur Flächenwandung senkrechten Wandungssstegen aufweist, und daß sich zwischen dem in Kontakt mit der Rohrleitung stehenden Teilprofil und einer der Seitenwandungen und/oder zwischen dem Teilprofil und einem der Wandungsstege des sickenartigen Profilabschnittes mindestens eine Verbindungswandung etwa parallel zu der Flächenwandung von dieser beabstandet erstreckt. Es wird somit erfindungsgemäß die Wärme außer über die Flächenwandung zusätzlich auch über die Verbindungswandung(en) verteilt bzw. geführt, was eine wesentliche Verbesserung des Wärmegradienten zur Folge hat.

Besonders gut eignet sich das erfindungsgemäße Verkleidungselement zur Erstellung von sogenannten abgehängten Decken. Zum Zwecke der Befestigung besitzt das Verkleidungselement vorteilhafterweise im zwischen der Nut und der Feder liegenden Profilbereich des Wärmeübertragungsprofils mindestens ein Halterungsprofil, in das an der Wand oder der Decke befestigte Befestigungselemente kraft- und/oder formschlüssig eingreifen.

Durch die flächendeckende Anordnung mehrerer erfindungsgemäßer Verkleidungselemente lassen sich vorteilhafterweise sehr große Wärmeübertragungsflächen bei geringem Montageaufwand erstellen, so daß ein außerordentlich guter Wirkungsgrad für die Wärmeübertragung erreicht werden kann. Dieser Wirkungsgrad wird zudem noch durch eine weitere Vergrößerung der Wärmeübertragungsfläche verbessert, wozu das Wärmeübertragungsprofil die in Profillängsrichtung verlaufenden, sickenförmigen Profilabschnitte aufweist. Durch eine Deckenverkleidung (abgehängte Decke) läßt sich insbesondere eine Kühlung realisieren, wobei die in dem Raum aufsteigende Wärme über das Wärmeübertragungsprofil auf die Rohrleitung übertragen und durch das durch die Rohrleitung strömende Wärmetransportmedium abgeführt wird.

Weitere vorteilhafte Ausgestaltungsmerkmale der Erfindung sind in den Unteransprüchen und der folgenden Beschreibung enthalten.

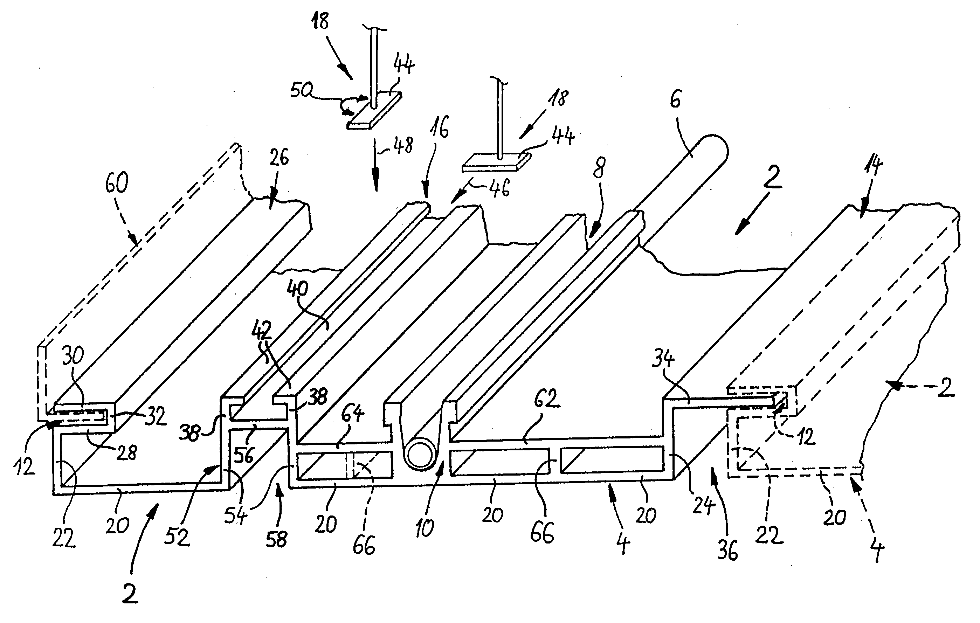

Anhand der Zeichnung soll im folgenden die Erfindung beispielhaft näher erläutert werden. Dabei zeigt die einzige Figur eine Perspektivansicht eines Teilstückes eines erfindungsgemäßen Flächen-Verkleidungselementes.

Ein erfindungsgemäßes Flächen-Verkleidungselement 2 besteht aus einem Wärmeübertragungsprofil 4 aus einem gut wärmeleitenden Material, insbesondere Metall, wie beispielsweise Aluminium. Innerhalb des Wärmeübertragungsprofils 4 verläuft eine vorzugsweise flexible, in wärmeleitendem Kontakt mit dem Wärmeübertragungsprofil 4 stehende Rohr- oder Schlauchleitung 6. Diese Rohrleitung 6 wird von einem Wärmetransportmedium, z.B. Wasser, durchströmt und liegt im dargestellten Beispiel an einer im Querschnitt halbkreisförmigen Wärmekontaktfläche unmittelbar oder über eine nicht dargestellte Wärmekontaktschicht an. Die Wärmekontaktfläche wird durch eine in ihrem Bodenbereich halbkreisförmige, an den Durchmesser der Rohrleitung 6 angepaßte Aufnahmenut 8 eines einstückig mit dem Wärmeübertragungsprofil 4 ausgebildeten Teilprofils 10 gebildet. Dabei wird die Rohrleitung 6 über nicht dargestellte Halteteile in ihrer dargestellten Lage gehalten.

Das Wärmeübertragungsprofil 4 besitzt an einer Längsseite eine seitlich offene Nut 12 und an der gegenüberliegenden Längsseite eine an die Nut 12 angepaßte, sich in der Ebene der Nut 12 von dieser weg nach außen erstreckende Feder 14. Weiterhin weist das Wärmeübertragungsprofil 4 in seinem zwischen der Nut 12 und der Feder 14 liegenden Profilbereich mindestens ein vorzugsweise einstückig mit dem Wärmeübertragungsprofil 4 ausgebildetes Halterungsprofil 16 auf, in welches an einer nicht dargestellten Wand- oder Deckenfläche befestigbare Befestigungselemente 18 insbesondere formschlüssig lösbar eingreifen.

Das Wärmeübertragungsprofil 4 ist mit einem flachen, im wesentlichen U-förmigen Querschnitt aus einer zu der zu verkleidenden Wand bzw. Decke parallelen Flächenwandung 20 und zwei zu dieser etwa senkrechten Seitenwandungen 22 und 24 gebildet. Dabei ist die Nut 12 vorzugsweise dadurch gebildet, daß die eine Seitenwandung 22 in einen im Querschnitt C-förmigen, die Nut 12 begrenzenden Profilabschnitt 26 mit zwei voneinander beabstandeten, zu der Flächenwandung 20 parallelen Schenkeln 28 und 30 und einem diese verbindenden, zur Flächenwandung 20 senkrechten Steg 32 übergeht. Dabei ist - wie dargestellt - der Schenkel 28 im Bereich seines freien Endes an die Seitenwandung 22 angebunden. Die andere Seitenwandung 24 geht etwa rechtwinklig in einen die Feder 14 bildenden, in seiner Dicke etwa der lichten Weite der Nut 12, d.h. dem lichten Abstand zwischen den Schenkeln 28, 30 des Profilabschnittes 26, entsprechenden Profilsteg 34 über. In dem Fall, daß zwei benachbarte Verkleidungselemente 2 bzw. Wärmeübertragungsprofile 4 (in der Zeichnungsfigur ist ein Teil eines benachbarten Verkleidungselementes 2 gestrichelt dargestellt) unmittelbar aneinander angrenzen sollen, ist die quer zur Profillängsachse gemessene Länge des Profilsteges 34 ≦ der Tiefe der Nut 12, so daß die Seitenwandungen 24 und 22 zur Anlage aneinander kommen können. Im dargestellten Ausführungsbeispiel der Erfindung weist jedoch der Profilsteg 34 quer zur Profillängsachse gemessen eine größere Länge auf, als die Tiefe der Nut 12 beträgt. Hierdurch ergibt sich zwischen den Seitenwandungen 22 und 24 zweier benachbarter Wärmeübertragungsprofile ein Abstand, was zur Bildung einer von den Seitenwandungen 22, 24 und dem Profilsteg 34 begrenzten, zum Raum hin offenen Nut 36 führt. Durch diese Nut 36 wird die wirksame Wärmeübertragungsfläche vorteilhafterweise vergrößert. Außerdem ergibt sich hierdurch ein ansprechendes Aussehen.

Es ist vorteilhaft, wenn das Halterungsprofil 16 aus zwei in Profillängsrichtung parallel verlaufenden sowie etwa senkrecht zur Flächenwandung 20 angeordneten Stegen 38 besteht, die jeweils in einander zugekehrte, parallel zur Flächenwandung 20 angeordnete, zwischen ihren freien Enden einen Einführschlitz 40 einschließende und die Befestigungselemente 18 umgreifende Haltestege 42 übergehen. In Verbindung mit dem so ausgestalteten Halterungsprofil 16 lassen sich Befestigungselemente 18 verwenden, die jeweils ein an den von den Stegen 38 und den Haltestegen 42 umschlossenen Querschnitt angepaßtes, beispielsweise plattenförmiges Halteteil 44 aufweisen. Jedes dieser Halteteile 44 besitzt dabei vorzugsweise eine Länge, die dem lichten Abstand zwischen den Stegen 38 des Halterungsprofils 16 etwa entspricht, sowie eine Breite, die ≦ der Breite des Einführschlitzes 40 zwischen den freien Enden der Haltestege 42 ist. Auf diese Weise lassen sich die Halteteile 44 entweder in Pfeilrichtung 46 in Profillängsrichtung in die Aufnahmenut des Halterungsprofils 16 einschieben, oder aber aus einer zur Flächenwandung 20 senkrechten Richtung, d.h. in Pfeilrichtung 48, durch den Einführschlitz 40 führen. Nachfolgend wird das Halteteil 44 um 90° in Richtung des Doppelfpeils 50 verdreht.

Erfindungsgemäß besitzt das Wärmeübertragungsprofil 4 insbesondere im Bereich der Flächenwandung 20 mindestens einen in Profillängsrichtung verlaufenden, sickenförmigen Profilabschnitt 52. Dieser Profilabschnitt 52 wird aus zwei zur Flächenwandung 20 senkrechten Wandungsstegen 54 und einem diese verbindenden, zur Flächenwandung 20 parallelen Wandungssteg 56 gebildet, so daß auch hier eine in Richtung des Raumes offene Nut 58 gebildet ist, durch die sich die wirksame Wärmeübertragungsfläche vorteilhafterweise vergrößert. Ferner ist im dargestellten Ausführungsbeispiel der Erfindung das oben beschriebene Halterungsprofil 16 im Bereich des sickenförmigen Profilabschnittes 52 angeordnet, wobei die Stege 38 des Halterungsprofils 16 als Verlängerungen der Wandungsstege 54 des sickenförmigen Profilabschnittes 52 gebildet sind.

In der Zeichnung ist ferner ein erfindungsgemäß vorgesehener, an Wand- bzw. Decke befestigbarer Befestigungswinkel 60 gestrichelt dargestellt. Dieser Befestigungswinkel 60 dient zur Halterung des Seitenrandes des jeweils äußersten Raumtemperierungselementes und greift hierzu entweder mit einem Schenkel in die Nut 12 ein oder umgreift mit einer im Bereich eines Schenkels gebildeten Aufnahmenut die Feder 14 des jeweiligen Wärmeübertragungsprofils 4. In der Zeichnung ist allerdings nur die erste Alternative dargestellt.

Erfindungsgemäß ist bei der dargestellten Ausführungsform zwischen dem Teilprofil 10 und einerseits der Seitenwandung 24 und andererseits dem Wandungssteg 54 des sickenförmigen Profilabschnitts 52 jeweils eine Verbindungswandung 62 bzw. 64 angeordnet. Diese Verbindungswandungen 62, 64 verlaufen vorzugsweise von der Flächenwandung 20 beabstandet parallel zu dieser und sind einstückig mit dem Wärmeübertragungsprofil 4 ausgebildet. Im dargestellten Ausführungsbeispiel sind das Teilprofil 10 und die Seitenwandung 24 relativ weit voneinander beabstandet. In diesem Fall ist es besonders zweckmäßig, wenn etwa im mittigen Bereich zwischen dem Teilprofil 10 und der Seitenwandung 24 die Flächenwandung 20 mit der Verbindungswandung 62 über eine senkrecht zu diesen angeordnete Stegwandung 66 verbunden sind. Aber auch im Bereich zwischen dem Teilprofil 10 und dem sickenförmigen Profilabschnitt 52 kann analog hierzu eine derartige Stegwandung 66 angeordnet sein, wie dies gestrichelt dargestellt ist. Auch die Stegwandung 66 ist jeweils einstückig mit dem Wärmeübertragungsprofil 4 ausgebildet. Sowohl die Verbindungswandungen 62, 64 als auch die Stegwandung(en) 66 erstrecken sich vorzugsweise über die gesamte Länge des Wärmeübertragungsprofils 4, jedoch liegt es ebenfalls im Rahmen der Erfindung, nur kurze, über Lücken in Profillängsrichtung voneinander beabstandete Teilstücke dieser Wandungen 62, 64 und 66 vorzusehen.

Durch diese erfindungsgemäße Ausgestaltung wird nun erreicht, daß die Wärmeverteilung, d.h. der Wärme-Gradient innerhalb des erfindungsgemäßen Verkleidungselementes 2 wesentlich verbessert wird, da die Wärme außer über die Flächenwandung 20 zusätzlich auch über die Verbindungswandungen 62, 64 und - falls vorhanden - auch über die Stegwandung(en) 66 verteilt bzw. geführt wird.

## Patentansprüche

1. Flächen-Verkleidungselement (2) zur flächendeckenden Montage insbesondere an Wänden und/oder Decken sowie zur Temperierung von Räumen, bestehend aus einem Wärmeübertragungsprofil (4) und mindestens einer innerhalb des Wärmeübertragungsprofils (4) verlaufenden, mit diesem über ein einstückiges Teilprofil (10) in wärmeleitendem Kontakt stehenden Rohrleitung (6) für ein Wärmetransportmedium, wobei das Wärmeübertragungsprofil (4) an einer Längsseite einer zur Wand bzw. Decke parallelen Flächenwandung (20) eine seitlich offene Nut (12) und an der gegenüberliegenden Längsseite eine an die Nut (12) angepaßte, sich in der Ebene der Nut (12) von dieser weg nach außen erstrekkende Feder (14) aufweist,
**dadurch gekennzeichnet,** daß das Wärmeübertragungsprofil (4) zwei zu der Flächenwandung (20) etwa senkrecht angeordnete Seitenwandungen (22, 24) und damit einen flachen, im wesentlichen U-förmigen Querschnitt sowie im Bereich der Flächenwandung (20) mindestens einen in Profillängsrichtung verlaufenden, sickenartigen Profilabschnitt (52) mit zwei zur Flächenwandung (20) senkrechten Wandungssstegen (54) aufweist, und daß sich zwischen dem in Kontakt mit der Rohrleitung (6) stehenden Teilprofil (10) und einer der Seitenwandungen (22,24) und/oder zwischen dem Teilprofil (10) und einem der Wandungsstege (54) des sickenartigen Profilabschnittes (52) mindestens eine Verbindungswandung (62, 64) etwa parallel zu der Flächenwandung (20) von dieser beabstandet erstreckt.

2. Flächen-Verkleidungselement nach Anspruch 1,
**dadurch gekennzeichnet,** daß sich die/jede Verbindungswandung (62/64) über die gesamte Länge des Wärmeübertragungsprofils (4) erstreckt.

3. Flächen-Verkleidungselement nach Anspruch 1 oder 2,
**gekennzeichnet durch** mindestens eine sich zwischen der Verbindungswandung (62, 64) und der Flächenwandung (20) etwa senkrecht zu dieser sowie vorzugsweise über die gesamte Länge des Wärmeübertragungsprofils (4) erstreckende Stegwandung (66).

4. Flächen-Verkleidungselement nach einem oder mehreren der Ansprüche 1 bis 3,
**dadurch gekennzeichnet,** daß das Wärmeübertragungsprofil (4) in seinem zwischen der Nut (12) und der Feder (14) liegenden Profilbereich mindestens ein Halterungsprofil (16) aufweist, in das an der Wand oder der Decke befestigte Befestigungselemente (18) kraft- und/oder formschlüssig lösbar eingreifen.

5. Flächen-Verkleidungslement nach einem oder mehreren der Ansprüche 1 bis 4,
**dadurch gekennzeichnet,** daß die eine Seitenwandung (22) des Wärmeübertragungsprofils (4) in einen im Querschnitt C-förmigen, die Nut (12) begrenzenden Profilabschnitt (26) mit zwei voneinander beabstandeten, zu der Flächenwandung (20) parallelen Schenkeln (28, 30) und einem diese verbindenden, zur Flächenwandung (20) senkrechten Steg (32) übergeht.

6. Flächen-Verkleidungselement nach einem oder mehreren der Ansprüche 1 bis 5,
**dadurch gekennzeichnet,** daß die andere Seitenwandung (24) des Wärmeübertragungsprofils (4) etwa rechtwinklig in einen die Feder (14) bildenden und in seiner Dicke etwa der lichten Weite der Nut (12) entsprechenden Profilsteg (34) übergeht.

7. Flächen-Verkleidungselement nach Anspruch 6,
**dadurch gekennzeichnet,** daß der die Feder (14) bildende Profilsteg (34) quer zur Profillängsachse gemessen eine größere Länge aufweist, als die Tiefe der Nut (12) beträgt.

8. Flächen-Verkleidungselement nach einem oder mehreren der Ansprüche 4 bis 7,
**dadurch gekennzeichnet,** daß das Halterungsprofil (16) aus zwei in Profillängsrichtung parallel verlaufenden, etwa senkrecht zur Flächenwandung (20) angeordneten Stegen (38) besteht, die jeweils in einander zugekehrte, parallel zur Flächenwandung (20) angeordnete, zwischen ihren freien Enden einen Einführschlitz (40) begrenzenden und die Befestigungselemente (18) umgreifende Haltestege (42) übergehen.

9. Flächen-Verkleidungselement nach einem oder mehreren der Ansprüche 4 bis 8,
**dadurch gekennzeichnet,** daß das Halterungsprofil (16) im Bereich des sickenförmigen Profilabschnittes (52) angeordnet ist.

10. Flächen-Verkleidungselement nach einem oder mehreren der Ansprüche 1 bis 9,
**gekennzeichnet durch** einen an Wand bzw. Decke befestigbaren, in die Nut (12) eingreifenden oder die Feder (14) umgreifenden Befestigungswinkel (60).

11. Flächen-Verkleidungselement nach einem oder mehreren der Ansprüche 1 bis 10,
**dadurch gekennzeichnet,** daß das mit der Rohrleitung (6) in wärmeleitendem Kontakt stehende Teilprofil (10) im Bereich der Flächenwandung (20) einstückig mit dem Wärmeübertragungsprofil (4) ausgebildet ist.

12. Flächen-Verkleidungselement nach einem oder mehreren der Ansprüche 1 bis 11,
**dadurch gekennzeichnet,** daß das Teilprofil (10) etwa U-förmig mit einer Aufnahmenut (8) für die Rohrleitung (6) ausgebildet ist, wobei die Aufnahmenut (8) vorzugsweise in ihrem Bodenbereich eine halbkreisförmige, an den Durchmesser der Rohrleitung (6) angepaßte Wärmekontaktfläche aufweist.

## Claims

1. Surface cladding element (2) for mounting in surface-covering manner, in particular on walls and/or ceilings and for controlling the temperature of rooms, comprising a heat transfer profile (4) and at least one pipe (6), which runs within the heat transfer profile (4) and is in heat-conductive contact therewith by way of a one-piece profile part (10), for a heat-transporting medium, the heat transfer profile (4) having, on a longitudinal side of a surface wall (20) parallel to the wall or ceiling, a laterally open groove (12) and, on the opposite longitudinal side, a tongue (14) which is matched to the groove (12) and extends outwards in the plane of the groove (12) away therefrom, characterized in that the heat transfer profile (4) has two side walls (22, 24) arranged approximately perpendicular to the surface wall (20) and thus a flat, substantially U-shaped cross-section and, in the region of the surface wall (20), at least one bead-like profile portion (52) which runs in the longitudinal direction of the profile and has two wall webs (54) perpendicular to the surface wall (20), and in that between the profile part (10) in contact with the pipe (6) and one of the side walls (22, 24) and/or between the profile part (10) and one of the wall webs (54) of the bead-like profile portion (52) there extends approximately parallel to the surface wall (20) and spaced therefrom at least one connection wall (62, 64).

2. Surface cladding element according to Claim 1, characterized in that the/each connection wall (62/64) extends over the entire length of the heat transfer profile.

3. Surface cladding element according to Claim 1 or 2, characterized by at least one web wall (66) extending between the connection wall (62, 64) and the surface wall (20) approximately perpendicular to the latter and preferably over the entire length of the heat transfer profile (4).

4. Surface cladding element according to one or more of Claims 1 to 3, characterized in that the heat transfer profile (4) has, in its profile region between the groove (12) and the tongue (14), at least one mounting profile (16) in which securing elements (18) secured to the wall or the ceiling engage detachably and by way of force and/or form.

5. Surface cladding element according to one or more of Claims 1 to 4, characterized in that the one side wall (22) of the heat transfer profile (4) merges into a profile portion (26) which is C-shaped in cross-section, which delimits the groove (12) and which has two mutually spaced legs (28, 30) parallel to the surface wall (20) and a web (32) connecting these and perpendicular to the surface wall (20).

6. Surface cladding element according to one or more of Claims 1 to 5, characterized in that the other side wall (24) of the heat transfer profile (4) merges approximately at right angles into a profiled web (34) forming the tongue (14) and corresponding in its thickness approximately to the clear width of the groove (12).

7. Surface cladding element according to Claim 6, characterized in that the profiled web (34) forming the tongue (14) has, measured transversely with respect to the longitudinal axis of the profile, a greater length than the groove (12) is deep.

8. Surface cladding element according to one or more of Claims 4 to 7, characterized in that the mounting profile (16) comprises two webs (38) which extend parallel in the longitudinal direction of the profile and are arranged approximately perpendicular to the surface wall (20) and each merge into holding webs (42) which point towards one another, are arranged parallel to the surface wall (20), delimit an insertion slot (40) between their free ends and grip around the securing elements (18).

9. Surface cladding element according to one or more of Claims 4 to 8, characterized in that the mounting profile (16) is arranged in the region of the bead-shaped profile portion (52).

10. Surface cladding element according to one or more of Claims 1 to 9, characterized by a securing angle piece (60) which is securable to wall or ceiling and which engages in the groove (12) or grips around the tongue (14).

11. Surface cladding element according to one or more of Claims 1 to 10, characterized in that the profile part (10) in heat-conductive contact with the pipe (6) is, in the region of the surface wall (20), constructed in one piece with the heat transfer profile (4).

12. Surface cladding element according to one or more of Claims 1 to 11, characterized in that the profile part (10) is constructed to be approximately U-shaped with a receiving groove (8) for the pipe (6), the receiving groove (8) preferably having in its base region a semicircular heat contact surface matched to the diameter of the pipe (6).

## Revendications

1. Elément de revêtement de surfaces (2) pouvant être monté, pour couvrir des surfaces, en particulier sur des parois et/ou plafonds, ainsi que pour tempérer des locaux, comportant un profilé de transfert de la chaleur (4) et au moins une conduite tubulaire (6) d'un agent caloporteur s'étendant dans le profilé de transfert de la chaleur (4) et étant en contact de conduction thermique avec celui-ci par une portion profilée (10) réalisée d'une seule pièce, le profilé de transfert de la chaleur (4) présentant sur un côté longitudinal d'une paroi plane (20) parallèle à la paroi ou au plafond, une rainure (12) ouverte latéralement et, sur le côté longitudinal en regard, un ressort (14) adapté à la rainure (12) et s'étendant dans le plan de la rainure (12) vers l'extérieur dans la direction opposée à celle-ci,
caractérisé par le fait que le profilé de transfert de la chaleur (4) comporte deux parois latérales (22, 24) disposées sensiblement perpendiculairement à la paroi plane (20) et ainsi une portion plate sensiblement en forme de U, ainsi que, dans la région de la paroi plane (20), au moins une portion profilée (52) en forme de moulure s'étendant dans la direction longitudinale du profilé, comportant deux parois d'entretoise (54) perpendiculaires à la paroi plane (20), et par le fait qu'entre la portion profilée (10) en contact avec la conduite tubulaire (6) et l'une des parois latérales (22, 24) et/ou entre la portion profilée (10) et l'une des paroi d'entretoise (54) de la portion profilée (52) en forme de moulure s'étend au moins une paroi de liaison (62, 64) sensiblement parallèlement à la paroi plane (20) et à une certaine distance de celle-ci.

2. Element de revêtement de surfaces selon la revendication 1,
caractérisé par le fait que la ou chaque paroi de liaison (62, 64) s'étend sur toute la longueur du profilé de transfert de la chaleur (4).

3. Elément de revêtement de surfaces selon la revendication 1 ou 2,
caractérisé par au moins une paroi d'entretoise (66) s'étendant entre la paroi de liaison (62, 64) et la paroi plane (20), sensiblement perpendiculairement à celle-ci et de préférence sur toute la longueur du profilé de transfert de la chaleur (4).

4. Elément de revêtement de surfaces selon l'une ou plusieurs des revendications 1 à 3,
caractérisé par le fait que le profilé de transfert de la chaleur (4) comporte, dans sa région profilé située entre la rainure (12) et le ressort (14), au moins un profilé de fixation (16) dans lequel s'insèrent par force ou mécaniquement et de manière amovible des éléments de fixation (18) fixés sur la paroi ou au plafond.

5. Elément de revêtement de surfaces selon l'une ou plusieurs des revendications 1 à 4,
caractérisé par le fait que l'une des parois latérales (22) du profilé de transfert de la chaleur (4) est suivi par une portion profilée (26) qui a une coupe transversale en C, qui délimite la rainure (12) et qui comporte deux branches (28, 30) séparées par une certaine distance et parallèles à la paroi plane (20) et une entretoise (32) qui les relie et qui est perpendiculaire à la paroi plane (20).

6. Elément de revêtement de surfaces selon l'une ou plusieurs des revendications 1 à 5,
caractérisé par le fait que l'autre paroi latérale (24) du profilé de transfert de la chaleur (4) est suivie, sensiblement à angle droit, d'une entretoise profilée (34) qui forme le ressort (14) et dont l'épaisseur correspond sensiblement à la largeur intérieure de la rainure (12).

7. Elément de revêtement de surfaces selon la revendication 6,
caractérisé par le fait que la longueur de l'entretoise profilée (34) qui forme le ressort (14), mesurée transversalement à l'axe longitudinal du profilé, est plus grande que la profondeur de la rainure (12).

8. Elément de revêtement de surfaces selon l'une ou plusieurs des revendications 4 à 7,
caractérisé par la fait que le profilé de fixation (16) consiste en deux entretoises (38) parallèles, disposées sensiblement perpendiculairement à la paroi plane (20) qui sont respectivement suivies par des entretoises de fixation (42) en regard, disposées parallèlement à la paroi plane (20) dont les extrémités libres délimitent une fente d'introduction (40) et qui entourent les éléments de fixation (18).

9. Eléments de revêtement de surfaces selon l'une ou plusieurs des revendications 4 à 8,
caractérisé par le fait que le profilé de fixation (16) est disposé dans la région de la portion profilée (52) en forme de moulure.

10. Elément de revêtement de surfaces selon l'une ou plusieurs des revendications 1 à 9,
caractérisé par un équerre de fixation (60) pouvant être fixé sur la paroi ou le plafond, s'engageant dans la rainure (12) ou entourant le ressort (14).

11. Elément de revêtement de surfaces selon l'une ou plusieurs des revendications 1 à 10,
caractérisé par le fait que, dans la région de la paroi plane (20), la portion profilée (10) qui est en contact de conduction thermique avec la conduite tubulaire (6) est venue d'une pièce avec le profilé de transfert de la chaleur (4).

12. Elément de revêtement de surfaces selon l'une ou plusieurs des revendications 1 à 11,
caractérisé par le fait que la portion profilée (10) a sensiblement la forme d'un U et comporte une rainure d'accueil (8) de la conduite tubulaire (6), la rainure d'accueil (8) présentant de préférence dans la région de son fond une surface de contact thermique en demi-cercle, adaptée au diamètre de la conduite tubulaire (6).
